# EUROPÄISCHE PATENTSCHRIFT

(11) **EP 1 488 958 B1**
(45) Veröffentlichungstag und Bekanntmachung des Hinweises auf die Patenterteilung: **19.09.2007**
(21) Anmeldenummer: 04013558.4
(22) Anmeldetag: 09.06.2004
(51) Int. Cl.: B60R 13/02

(54) **Verbundbauteil, sowie Verfahren zu dessen Herstellung**
Composite element and method of producing it
Elément composite et son procédé de fabrication

(30) Priorität: 12.06.2003 DE 10326995
(43) Veröffentlichungstag der Anmeldung: 22.12.2004
(73) Patentinhaber: REUM GmbH & Co. Betriebs KG, 74736 Hardheim (DE)
(72) Erfinder: Müller, Robert, 74722 Buchen (DE)
(74) Vertreter: Maser, Jochen

(56) Entgegenhaltungen:
- DE-A- 10 123 344
- FR-A- 2 790 424
- US-A- 4 481 160
- US-A- 5 773 154
- US-B1- 6 264 869

## Beschreibung

Die Erfindung betrifft ein Verbundbauteil mit einer metallischen Schicht und wenigstens einer weiteren aus thermoplastischem Polymer bestehenden Schicht, sowie ein Verfahren zu dessen Herstellung.

Aus der US 6,264,869 B1 geht ein Verfahren zur Herstellung eines dekorativen Emblems hervor, das aus einem steifen Trägermaterial besteht und auf einer Vorderseite ein dreidimensionales Design umfasst. Dieses dreidimensionale Design wird dadurch hergestellt, dass in einer ersten Spritzgussform eine erste Schicht aufgebracht wird, die beispielsweise aus einem thermoplastischem Polymer, wie ABS, ASA oder PA besteht und mit dem Trägermaterial das dreidimensionale Design bildet. Im Anschluss daran wird in einer zweiten Form eine transparente Plastikschicht als Schutzkappe aufgebracht, um das zwischen den Vorsprüngen oder Vertiefungen des Trägermaterials und der darauf aufgebrachten ersten Schicht gebildeten dreidimensionalen Design zu schließen und zu schützen. Derartige Bauteile werden beispielsweise in einem Innenraum eines Fahrzeuges eingesetzt.

Beim Einsatz derartiger Teile wie beispielsweise in Kraftfahrzeugen, treten erhebliche Temperaturschwankungen auf. Des weiteren sind derartige Teile weiteren Umweltbedingungen wie Feuchtigkeit und weiteren Beanspruchungen wie Sonneneinstrahlung, Vibrationen und dergleichen ausgesetzt. Dies führt zu unterschiedlichen Problemen, die beispielsweise zu einer möglichen Deformation, zum Verzug oder zur Rissbildung der Teile führen können.

Der Erfindung liegt deshalb die Aufgabe zugrunde, eine Verbundbauteil zu schaffen, sowie ein Verfahren zu dessen Herstellung vorzuschlagen, welches unabhängig von Umweltbedingungen oder weiteren Einflüssen langlebig ausgebildet ist.

Diese Aufgabe wird durch ein Verbundbauteil gemäß dem Anspruch 1 sowie ein Verfahren zu dessen Herstellung gemäß dem Anspruch 7 gelöst.

Die erfindungsgemäße Ausgestaltung eines Verbundbauteils, bei dem zwischen einer metallischen Schicht und wenigstens einer weiteren, die Funktion bildenden Schicht eine Zwischenschicht mit einer geringen Shorehärte angeordnet ist, weist den Vorteil auf, dass diese Zwischenschicht eine Entkopplung zwischen der metallischen Schicht und der weiteren Kunststoffschicht bildet. Dadurch werden unterschiedliche Längenausdehnungen der Verbundmaterialien auf Grund der unterschiedlichen E-Module von der metallischen Schicht und der zumindest einen weiteren Kunststoffschicht durch diese Zwischenschicht ausgeglichen. Gleichzeitig wird durch die Dicke der Zwischenschicht, welche in Abhängigkeit zur maximalen Länge der deckungsgleichen Zuordnung von der metallischen Schicht und der zumindest einen weiteren Schicht aus Kunststoff ausgebildet ist, ermöglicht dass, unabhängig von den auftretenden Belastungen und Spannungen, insbesondere Scherspannungen, eine feste und dauerhafte Verbindung zwischen der metallischen Schicht und der weiteren Kunststoffschicht durch die flexible und dehnfähige Zwischenschicht gegeben ist.

Nach einer weiteren vorteilhaften Ausgestaltung der Erfindung ist vorgesehen, dass sich die Zwischenschicht vollständig zwischen der metallischen Schicht und der formgebenden Schicht erstreckt. Dadurch kann eine einfache Herstellung des Verbundbauteils vorgesehen sein. Gleichzeitig ermöglicht diese Ausgestaltung, dass die Längenausdehnungen in Abhängigkeit der Bauteilgeometrien in jeglicher Richtung ohne Behinderung erfolgen kann.

Nach einer weiteren vorteilhaften Ausführungsform der Erfindung ist vorgesehen, dass zumindest die Oberfläche der metallischen Schicht zumindest teilweise vorbehandelt, beschichtet oder bearbeitet ist. Durch die zumindest teilweise Vorbehandlung, Beschichtung oder Bearbeitung der metallischen Schicht können insbesondere die Haftungseigenschaften der Zwischenschicht und der zumindest einen weiteren Kunststoffschicht zur metallischen Schicht bestimmt werden. Dadurch lassen sich unterschiedliche Wirkungen und Einsatzmöglichkeiten erzielen.

Die Zwischenschicht und die Kunststoffschicht sind bevorzugt als Verbundmaterialien ausgebildet. Hierbei können unterschiedliche thermoplastische Kunststoffpaarungen, Weichkunststoffpaarungen, Hartkunststoffpaarungen oder dergleichen vorgesehen sein, welche sich nach einem Zwei- oder Mehrkomponenten-Kunstoffspritzverfahren herstellen lassen.

Durch die Auswahl der Werkstoffpaarungen lassen sich langlebige Verbindungen zwischen der Zwischenschicht und der Kunststoffschicht realisieren. Durch die Abstimmung der zueinander angeordneten Polymerschichten können des weiteren vorteilhafte Hersteifungsparameter verwirklicht werden.

Nach einer weiteren vorteilhaften Ausgestaltung der Erfindung ist vorgesehen, dass die Zwischenschicht im Verhältnis zur zumindest einer weiteren Kunststoffschicht dünner ausgebildet ist. Dadurch können Verbundbauteile der bisher bekannten Art und Form hergestellt werden, wobei durch die Einbringung der Zwischenschicht zumindest teilweise zwischen der metallischen Schicht und der die Funktion bildende Kunststoffschicht eine Verbesserung der Lebensdauer und der Funktion gegeben ist. Die Dicke der Zwischenschicht ist bevorzugt derart ausgewählt, dass eine hinreichende Entkopplung der auftretenden Spannungen und Belastungen von der die Funktion bildenden Kunststoffschichten zu der metallischen Schicht gegeben ist.

Die metallische Schicht, die Zwischenschicht und die zumindest eine weitere Kunststoffschicht weisen vorteilhafterweise eine Sandwichstruktur auf. Dadurch können Verbundbauteile geschaffen sein, welche technische als auch ästhetische Ansprüche erfüllen.

Das erfindungsgemäße Verfahren zur Herstellung eines Verbundbauteils mit wenigstens einer metallischen Schicht und wenigstens einer Kunststoffschicht, bei dem auf die metallische Schicht eine erste Schicht als Zwischenschicht aufgebracht wird und zumindest in einem weiteren Schritt zumindest eine weitere die Funktion bildende Schicht aufgebracht wird, weist den Vorteil auf, dass eine einfache Herstellung von Verbundbauteilen gegeben ist. Durch das nacheinander Aufbringen der Zwischenschicht und wenigstens einer weiteren Schicht kann nach einem Spritz-, Spritzguß- oder Preßverfahren die aufzubringende Schichtdicke der Zwischenschicht und der Kunststoffschicht exakt bestimmt werden. Des weiteren kann die die Funktion bildende Kunststoffschicht entkoppelt zur metallischen Schicht aufgebracht werden. Dieses Verfahren ermöglicht eine schnelle Herstellung und eine vielfältige Ausgestaltung der einzelnen Schichten für Verbundbauteile.

Nach einer vorteilhaften Ausgestaltung des Verfahrens ist vorgesehen, dass das Verbundbauteil durch eine Mehrkammer-Spritzgußtechnik hergestellt wird. Dadurch können Serienbauteile in hoher Stückzahl kostengünstig und in hoher Qualität hergestellt werden. Eine derartige Mehrkammer-Spritzgußtechnik ermöglicht des weiteren eine Vielfalt an Ausführungsformen, um die Verbundbauteile an unterschiedliche Anforderungen wie Geometrie, Funktionalität und ästhetische Gestaltung anzupassen.

Nach einer vorteilhaften Ausgestaltung des Verfahrens ist vorgesehen, dass die im Zwei- oder Mehrkomponentenverfahren hergestellte Zwischenschicht und wenigstens eine weitere Kunststoffschicht in einem Drehtellersystem oder einem Schiebesystem oder in einem teilautomatisierten System aufgebaut werden. Somit kann einerseits eine Einbindung in einen vollautomatisierten Prozess ermöglicht sein. Andererseits kann das erfindungsgemäße Verfahren ebenfalls in einem teilautomatisierten Prozess mit dazwischen vorgesehenen Handarbeitsgängen zwischen den einzelnen Verfahrensschritten ermöglicht sein.

Nach einer vorteilhaften Ausgestaltung des Verfahrens ist vorgesehen, dass die Zwischenschicht zumindest auf einem Flächenabschnitt der metallischen Schicht aufgebracht wird, welcher zumindest mit der zumindest einen weiteren Kunststoffschicht überdeckt wird. Somit kann ein Mindestmaß an Entkopplung zwischen der weiteren Kunststoffschicht und der metallischen Schicht erzielt werden. Des weiteren kann dadurch ermöglicht sein, dass durch das Aufbringen der Zwischenschicht auf einen Flächenabschnitt der metallischen Schicht, der nicht von der weiteren Kunststoffschicht überdeckt wird, der Vorteil gegeben ist, dass die Zwischenschicht eine Entkopplung der metallischen Schicht im eingebauten Zustand zu einem Instrumententafelbauteil oder weiteren Bauteil gegeben ist, welchem das Verbundbauteil zugeordnet ist. Die Zwischenschicht kann dabei beispielsweise eine elektrisch oder thermisch isolierende als auch eine schwingungsisolierende Funktion aufweisen.

Die metallische Schicht wird vorteilhafterweise zumindest teilweise vorbehandelt, veredelt, beschichtet oder bearbeitet, bevor die Zwischenschicht zumindest teilweise auf die metallische Schicht aufgebracht wird. Dabei kann vorgesehen sein, dass die metallische Schicht beispielsweise entfettet wird oder mit einer Grundierung oder mit einem Haftverbesserer versehen wird. Ebenso kann die Oberfläche des weiteren beschichtet werden, beispielsweise durch eine PVD-Beschichtung oder durch eine Galvanisierung. Ebenso können weitere Veredelungen oder Dekorprägungen sowie Oberflächenbehandlungen zur Erhöhung der Oberflächenrauigkeit oder Verringerung von Oberflächenspannungen vorgesehen sein, in Abhängigkeit der für die metallische Schicht verwendeten Materialien werden die vorbereitenden Tätigkeiten wie beispielsweise die Vorbehandlung für die Veredelung, die Beschichtung oder die Bearbeitung ausgewählt. Bei Aluminiumschichten kann beispielsweise eine Eloxierung durchgeführt werden.

Nach einer weiteren vorteilhaften Ausgestaltung des Verfahrens ist vorgesehen, dass die metallische Schicht bereichsweise vorbehandelt wird und die Zwischenschicht auf die vorbehandelten Flächen der metallischen Schicht aufgebracht wird. Dadurch kann erzielt werden, dass eine Haftbrücke zwischen der metallischen Schicht und der weiteren Kunststoffschicht durch die Zwischenschicht erzielt wird. An den benachbarten und daran angrenzenden Bereichen kann erzielt werden, dass zwischen der Kunststoffschicht und der metallischen Schicht keine Verbindung aufgebaut wird, wodurch einerseits eine tragfähige Verbindung zwischen der weiteren Kunststoffschicht und der metallischen Schicht gegeben ist, als auch eine Erhöhung der Flexibilität hinsichtlich der Ausdehnung auf Grund von unterschiedlich auftretenden Spannungen. Diese vorteilhafte Ausgestaltung weist somit eine stelzen- oder streifenförmige Verbindung auf, durch welche weitere vorteilhafte Einsatzmöglichkeiten gegeben sind.

Die Erfindung sowie weitere vorteilhafte Ausführungsformen und Weiterbildungen derselben werden im Folgenden anhand dem in der Zeichnung dargestellten Beispiel näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figur 1: eine schematische Schnittdarstellung eines erfindungsgemäßen Verbundbauteils,
- Figur 2: eine schematische Schnittdarstellung einer alternativen Ausgestaltung eines Verbundbauteils und
- Figur 3: eine schematische Schnittdarstellung eines weiteren alternativ ausgebildeten Verbundbauteils,
- Figur 4: eine schematische Schnittdarstellung einer alternativen Ausgestaltung eines Verbundbauteils,
- Figur 5: eine schematische Schnittdarstellung einer weiteren alternativen Ausgestaltung eines Verbundbauteils,
- Figur 6: eine schematische Draufsicht im Schnitt auf ein Verbundbauteil gemäß Figur 5 und
- Figur 7: eine schematische Draufsicht im Schnitt auf eine weitere Ausgestaltung eines Verbundbauteils gemäß Figur 5.

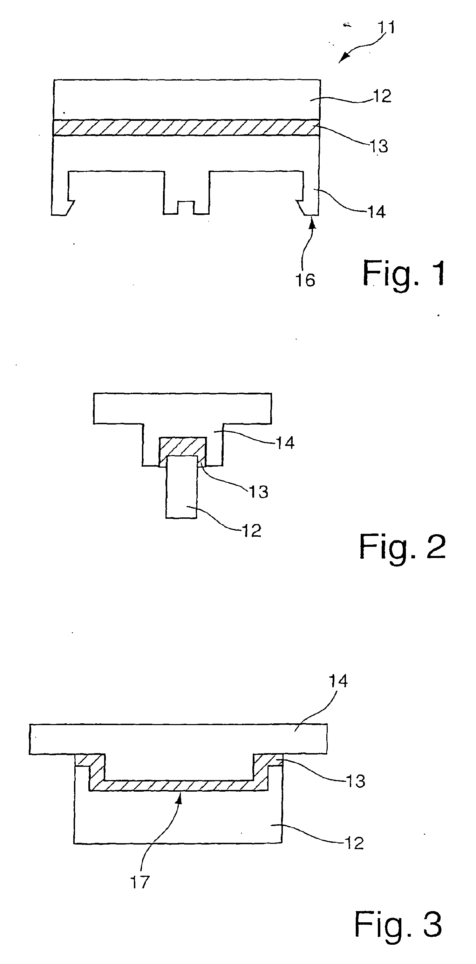

In Figur 1 ist ein erfindungsgemäßes Verbundbauteil 11 im Vollquerschnitt dargestellt. Dieses Formteil weist eine metallische Schicht 12 auf, auf der einseitig eine Zwischenschicht 13 aufgebracht ist. Die Zwischenschicht 13 nimmt eine Kunststoffschicht 14 auf, welche beispielsweise als Funktionsteil ausgebildet ist. Das in Figur 1 dargestellte Verbundbauteil 11 kann beispielsweise als Lautsprecherabdeckung, als Blende in einem Instrumententafelbauteil, als Abdeckung für eine Luftzuführvorrichtung oder dergleichen vorgesehen sein. Des weiteren kann dieses Verbundbauteil 11 für weitere private und industrielle Anwendungen vorgesehen sein. Dieses Verbundbauteil 11 ist nicht auf den Einsatzbereich und in Kraftfahrzeugen, insbesondere deren Innenraum, begrenzt.

Die metallische Schicht 12 kann entsprechend den ästhetischen Anforderungen ausgebildet sein und beispielsweise aus Edelstahl, einer Aluminiumlegierung, Nichteisenmetallen oder dergleichen vorgesehen sein.

Die Zwischenschicht 13 wird bevorzugt als dünne Schicht auf die metallische Schicht 12 aufgebracht und weist eine geringe Shorehärte auf. Bevorzugt wird ein weiches thermoplastisches Material verwendet, wodurch eine Entkopplung zwischen der metallischen Schicht 12 und der Kunststoffschicht 14 erzielt wird, die beispielsweise durch unterschiedliche Belastungen oder Längenausdehnungen auftreten. Des weiteren kann dadurch auch eine Schwingungsabsorption oder Schallisolierung ermöglicht sein.

Die Dicke der Zwischenschicht 13 ist bei einer vollflächigen Ausbildung zwischen der metallischen Schicht 12 und der Kunststoffschicht 14 durch eine maximale Länge des Verbundbauteils 11 bestimmt.

Die Zwischenschicht 13 und Kunststoffschicht 14 sind bevorzugt als Werkstoffpaarung ausgebildet, welche ein thermoplastisches Verbundmaterial bilden. Hierbei können vorteilhafterweise Kunststoffpaarungen wie TPE, SEBS, TPU oder dergleichen vorgesehen sein. Die Kunststoffschicht 14 kann dabei durch eine einzelne Schicht aus einem thermoplastischen Kunststoff oder auch aus mehreren Schichten aufgebaut sein, wobei zumindest die zur Zwischenschicht 13 weisende Schicht auf die Zwischenschicht 13 abgestimmt ist.

In Figur 1 ist die Kunststoffschicht 14 als Funktionsteil ausgebildet, welches beispielsweise ein Rastelement 16 aufweist, um in einer Aufnahme positioniert und fixiert zu werden. Alternativ kann auch vorgesehen sein, dass die metallische Schicht 12 das Funktionsteil bildet und die Kunststoffschicht 14 eine Dekorfläche ausbildet. Unabhängig davon, ob die metallische Schicht 12 oder die Kunststoffschicht 14 eine Dekorfläche ausbildet, können die metallischen Schicht 12 und die Kunststoffschicht 14 weitere Materialen oder Materialkombinationen aus Kunststoff, Fasern, Textilfasern, Metall, Leder, Holz oder Laminat als zumindest teilweise Deckschicht aufnehmen, um den ästhetischen Gestaltungsanforderungen zu genügen.

Die Zwischenschicht 13 gemäß Figur 1 ist beispielsweise nur auf einer Seite der metallischen Schicht 12 vorgesehen und erstreckt sich vollflächig. Diese Zwischenschicht 13 kann ebenso auf zwei oder mehreren Flächen oder Seiten der metallischen Schicht 12 zumindest abschnittsweise oder vollflächig aufgebracht sein.

Die metallische Schicht 12 ist des weiteren zumindest abschnittsweise vor dem Aufbringen der Zwischenschicht 13 vorbehandelt, veredelt, beschichtet oder bearbeitet. Als Beschichtung kann beispielsweise vorgesehen sein, dass die metallische Schicht 12 eine Grundierung aufnimmt. Ebenso kann ein Haftvermittler aufgebracht sein. Die metallische Schicht 12 kann ebenso entfettet oder von Zunder oder sonstigen Verunreinigungen befreit sein. Ebenso können chemische Vorbehandlungsprozesse wie auch mechanische Vorbehandlungsprozesse vorgesehen sein. Es können des weiteren Beschichtungen wie ein galvanischer Überzug oder weitere metallische Beschichtungen aufgebracht werden. Bei der Verwendung von Aluminium kann beispielsweise eine Eloxierung aufgebracht sein. Ebenso können bei metallischen Schichten eine Brünierung, Chromatierung, eine PVD-Beschichtung oder dergleichen vorgesehen sein. Des weiteren kann eine Veredelung oder Dekorprägung vor dem zumindest teilweisen Aufbringen der Zwischenschicht 13 und der Kunststoffschicht 14 vorgesehen sein. Die Vorbehandlung, Veredelung, Beschichtung oder sonstige Bearbeitung wird auf die Zwischenschicht 13 als auch auf die Funktion des herzustellenden Verbundbauteils 11 abgestimmt.

In Figur 2 ist eine alternative Ausführungsform eines Verbundbauteils 11 dargestellt. Auf einer metallischen Schicht 12, die beispielsweise als Träger ausgebildet ist, wird die Zwischenschicht 13 aufgebracht, welche die Kunststoffschicht 14 trägt. Die Zwischenschicht 13 umgreift beispielsweise einen oberen Abschnitt der Schicht 12 und bildet somit ein Entkopplungslager für die Schicht 14. Diese Schicht 14 kann beispielsweise als Zweikomponenten-Kunststoffoberfläche ausgebildet sein, so dass in Verbindung mit der Zwischenschicht 13 eine Drei- oder Mehrkomponentenanordnung vorgesehen ist.

In Figur 3 ist eine alternative Ausgestaltung eines Verbundbauteils 11 dargestellt. Die metallische Schicht 12 weist eine Vertiefung 17 auf, entlang der die Zwischenschicht 13 verläuft. Eine Kunststoffschicht 14 ist an die Kontur der Vertiefung 17 in diesem Teilbereich angepasst und verläuft analog. Alternativ kann vorgesehen sein, dass die Vertiefung 17 vollständig durch eine Zwischenschicht ausbildet ist, so dass die Kontaktfläche zur Aufnahme einer Kunststoffschicht 14 im wesentlichen eben ausgebildet ist.

Die Zwischenschicht 13 kann beispielsweise über ihre gesamte Fläche konstant ausgebildet sein. Ebenso können unterschiedliche Schichtdicken der Zwischenschicht 13 vorgesehen sein. Beispielsweise in den Figuren 2 und 3 können bevorzugt unterschiedliche Schichtdicken ausgebildet werden, um entsprechend den größten Längserstreckungen einen sicheren Längenausgleich zu ermöglichen.

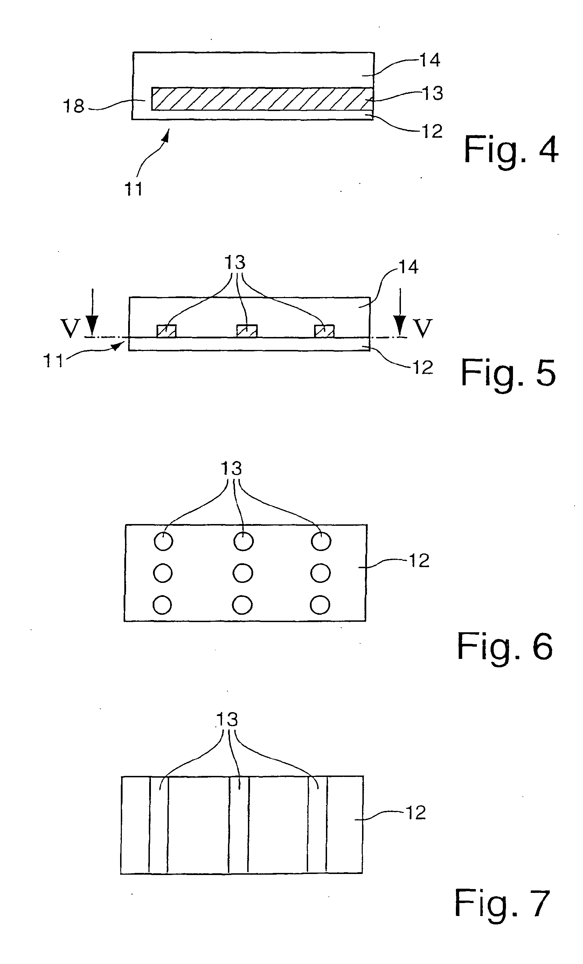

In Figur 4 ist eine weitere alternative Ausführungsform eines Verbundbauteils 11 dargestellt. Bei diesem Verbundbauteil 11 ist vorgesehen, daß die Kunststoffschicht 14 einen Abschnitt 18 aufweist, der unmittelbar mit der metallischen Schicht 12 in Verbindung steht. Benachbart zu diesem Abschnitt 18 ist die Zwischenschicht 13 vorgesehen, welche die Kunststoffschicht 14 zur metallischen Schicht 12 entkoppelt. Durch diese beispielhafte Ausgestaltung ist ermöglicht, dass die Kunststoffschicht 14 über einen Bereich oder einen Abschnitt 18 fest zur metallischen Schicht 12 vorgesehen ist, wohingegen der überwiegende Bereich der Kunststoffschicht 14 zur metallischen Schicht 12 durch die Zwischenschicht 13 entkoppelt ist. Durch den Abschnitt 18 ist somit die Ausdehnungsrichtung der Kunststoffschicht 14 in Bezug auf die metallische Schicht 12 in zumindest einer Richtung begrenzt, so dass die Längenausdehnungen beispielsweise auf Grund von Erwärmung gezielt in eine Richtung erfolgen. Dadurch können wiederum spezifische Anforderungen zur Aufnahme und Fixierung der Verbundbauteile 11 in weiteren Bauteilen, Gehäusen oder Anordnungen ermöglicht werden. Der Abschnitt 18 bildet eine Art Festlager, wohingehend der weitere Bereich der Kunststoffschicht 14 über die Zwischenschicht 13 zur metallischen Schicht 12 als Los-Lager aufgenommen ist.

In Figur 5 ist eine weitere alternative Ausgestaltung eines Verbundbauteiles 11 dargestellt. Die Zwischenschicht 13 ist bereichsweise auf der metallischen Schicht 12 aufgebracht. In Figur 6 ist eine erste Alternative in der Draufsicht im Schnitt dargestellt, bei der die Zwischenschicht 13 beispielsweise durch kreisförmige oder mehreckige Flächenabschnitte gebildet ist. In Figur 7 ist alternativ eine Draufsicht im Schnitt einer streifenförmigen Anordnung der Zwischenschicht 13 auf der metallischen Schicht 12 dargestellt. Ebenso können weitere rasterförmige, rautenförmige, wellenförmige Anordnungen der Zwischenschichten 13 auf der metallischen Schicht 12 vorgesehen sein. Das Grundprinzip dieser Ausführungsformen, unabhängig der konkreten Ausgestaltung der Zwischenschicht 13 gemäß Figur 6 und 7, wird näher anhand Figur 5 erörtert. Die Kunststoffschicht 14 ist über die Bereiche der Zwischenschicht 13 fest zur metallischen Schicht 12 verbunden. In den dazwischen liegenden Bereichen 21 ist keine Verbindung zwischen der Kunststoffschicht 14 und der metallischen Schicht 12 gegeben. Dadurch kann beispielsweise eine stelzenförmige Aufnahme der Kunststoffschicht 14 zur metallischen Schicht 12 über die Zwischenschicht 13 gegeben sein. Auftretenden Beanspruchungen zwischen der metallischen Schicht 12 und der Kunststoffschicht 14 können somit besser aufgenommen werden. Durch die nur teilweise Ausgestaltung der Zwischenschicht 13 können einzelne Zonen zwischen der Kunststoffschicht 14 und der metallischen Schicht 12 ausgebildet werden, die keine Verbindung aufweisen, wodurch vorteilhafte Entkopplungsbereiche für die auftretenden Spannungen geschaffen werden können.

Alternativ kann vorgesehen sein, dass die Bereiche 21 in denen die Kunststoffschicht 14 unmittelbar zur metallischen Schicht 12 angeordnet ist auch eine feste Verbindung eingehen. Diese werden dann bevorzugt in der Fläche gering ausgebildet im Vergleich zum übrigen Flächenanteil der einander zugeordneten Kunststoffschicht 14 und metallischen Schicht 12.

Die metallische Schicht 12 ist vorteilhafterweise entsprechend vorbehandelt, um bei dem zum Einsatz kommenden Werkstoff für die Kunststoffschicht 14 in Abhängigkeit des Einsatzzweckes in den Bereichen 21 eine feste Verbindung zu bilden oder keine Adhäsionskräfte aufzubauen.

Die bereichsweise Ausgestaltung der Zwischenschicht 13 gemäß den Ausführungsformen in Figur 6 oder 7 können in ihrer Dicke unterschiedlich ausgestaltet sein und an unterschiedliche Profilierungen der metallischen Schicht 12 angepasst werden.

Das erfindungsgemäße Verfahren zur Herstellung der in den Figuren 1 bis 7 beispielhaft beschriebenen Verbundbauteile 11 erfolgt gemäß folgenden Schritten.

Eine metallische Schicht 12 wird in eine erste Kavität eingelegt, um die Zwischenschicht 13 zumindest teilsweise aufzubringen. Die metallische Schicht 12 kann vorbehandelt sein. Ebenso kann die metallische Schicht 12 vortemperiert sein. Nach dem zumindest teilsweise Aufspritzen, Hinterspritzen oder Umspritzen der Zwischenschicht 13 zur metallischen Schicht 12 wird das Zwischenprodukt aus der ersten Kavität entnommen und einer zweiten Kavität zugeführt. Die zumindest eine Kunststoffschicht 14 wird wiederum aufgespritzt, hinterspritzt oder umspritzt, um ein Verbundmaterial mit der Zwischenschicht 13 zu bilden. Anwendungsspezifisch können ein oder mehrere weitere Schritte zum Aufbringen einer Kunststoffschicht vorgesehen sein.

Durch dieses Zwei- oder Mehrkomponentenverfahren zum zumindest teilweisen An-, Um- oder Hinterspritzen einer metallischen Schicht 12 ist ermöglicht, dass durch unterschiedliche Längenausdehnungen herrührende Beeinträchtigungen oder Beschädigungen der Verbundbauteile 11 verhindert werden und eine Entkopplung erzielt wird.

## Patentansprüche

1. Verbundbauteil (11) mit einer metallischen Schicht (12) und wenigstens einer Kunststoffschicht (14), welche durch ein Spritz-, Spritzguss- oder Pressverfahren zumindest in Teilabschnitten miteinander verbunden sind und mit zumindest einer sich teilsweise zwischen der metallischen Schicht (12) und der zumindest einen Kunststoffschicht (14) angeordnete Zwischenschicht (13), **dadurch gekennzeichnet, dass** die Zwischenschicht (13) eine geringe Shorehärte aufweist, die eine Entkopplung zwischen der metallischen Schicht (13) und der weiteren Kunststoffschicht (14) bildet, dass die Dicke der Zwischenschicht (13) in Abhängigkeit zur maximalen Länge einer deckungsgleichen Zuordnung von der metallischen Schicht (12) und der zumindest einen weiteren Kunststoffschicht (14) ist und dass diese Zwischenschicht (13) und die daran angrenzende zumindest eine weitere Kunststoffschicht (14) als thermoplastisches Verbundmaterial ausgebildet sind.

2. Verbundbauteil nach Anspruch 1, **dadurch gekennzeichnet, dass** die Zwischenschicht (13) sich vollständig zwischen der metallischen Schicht (12) und der formgebenden Kunststoffschicht (14) erstreckt.

3. Verbundbauteil nach einem der vorhergehenden Ansprüche, **dadurch gekennzeichnet, dass** zumindest die Oberfläche der metallischen Schicht (12) zumindest teilweise eine Vorbehandlung, Beschichtung oder Bearbeitung aufweist.

4. Verbundbauteil nach einem der vorhergehenden Ansprüche, **dadurch gekennzeichnet, dass** die Zwischenschicht (13) und die Kunststoffschicht (14) als Mehrkomponenten-Verbundmaterial ausgebildet sind.

5. Verbundbauteil nach einem der vorhergehenden Ansprüche, **dadurch gekennzeichnet, dass** die Zwischenschicht (13) im Verhältnis zur zumindest einen weiteren Kunststoffschicht (14) dünner ausgebildet ist.

6. Verbundbauteil nach einem der vorhergehenden Ansprüche, **dadurch gekennzeichnet, dass** die metallische Schicht (12), die Zwischenschicht (13) und die zumindest eine Kunststoffschicht (14) eine Sandwichstruktur aufweisen.

7. Verfahren zur Herstellung eines aus wenigstens einer metallischen Schicht (12) einer Zwischenschicht (13) und wenigstens einer Kunststoffschicht (14) bestehenden Verbundbauteils nach einem der Ansprüche 1 bis 6, **dadurch gekennzeichnet, dass** durch ein Spritz-, Spritzguss- oder Pressverfahren auf die metallische Schicht (12) die Zwischenschicht (13) aufgebracht wird und dass in einem weiteren Schritt durch ein Spritz-, Spritzguss- oder Pressverfahren die zumindest eine weitere Kunststoffschicht (14) aufgebracht wird.

8. Verfahren nach Anspruch 7, **dadurch gekennzeichnet, dass** die Zwischenschicht (13) und die zumindest eine weitere Kunststoffschicht (14) durch eine Mehrkammer-Spritzgusstechnik hergestellt wird.

9. Verfahren nach Anspruch 8, **dadurch gekennzeichnet, dass** die erste Schicht (12) und die zumindest eine weitere Schicht (14) in einem Drehtellersystem, Schiebesystem oder in einem teilautomatisierten System aufgebracht werden.

10. Verfahren nach Anspruch 7, **dadurch gekennzeichnet, dass** die Zwischenschicht (13) zumindest auf einen Flächenabschnitt der metallischen Schicht (12) aufgebracht wird, welcher zumindest mit der zumindest einen weiteren Kunststoffschicht (14) überdeckt wird.

11. Verfahren nach einem der Ansprüche 7 bis 10, **dadurch gekennzeichnet, dass** zumindest die Oberfläche der metallischen Schicht (12) vor dem zumindest teilweisen Aufbringen der Zwischenschicht (13) zumindest teilweise vorbehandelt, veredelt, beschichtet oder bearbeitet wird.

12. Verfahren nach einem der Ansprüche 7 bis 11, **dadurch gekennzeichnet, dass** die metallische Schicht (12) bereichsweise vorbehandelt wird und die Zwischenschicht (13) auf die vorbehandelte Fläche der metallischen Schicht (12) aufgebracht wird.

## Claims

1. Composite element (11) comprising a metal layer (12) and at least one plastic layer (14), which at least in partial sections are joined together by an injection, injection moulding or compression moulding process, and at least one intermediate layer (13) partially disposed between the metal layer (12) and at least one plastic layer (14), **characterized in that** the intermediate layer (13) has a low Shore hardness, which forms a decoupling between the metal layer (13) and the other plastic layer (14), that the thickness of the intermediate layer (13) varies as a function of the maximum length of a congruent matching of the metal layer (12) and at least one further plastic layer (14) and that this intermediate layer (13) and at least one further plastic layer (14) adjoining this take the form of a thermoplastic composite material.

2. Composite element according to Claim 1, **characterized in that** the intermediate layer (13) extends fully between the metal layer (12) and the profiling plastic layer (14).

3. Composite element according to any one of the preceding claims, **characterized in that** at least the surface of the metal layer (12) has, at least in part, a pre-treatment, coating or machining.

4. Composite element according to any one of the preceding claims, **characterized in that** the intermediate layer (13) and the plastic layer (14) take the form of multi-component composite material.

5. Composite element according to any one of the preceding claims, **characterized in that** the intermediate layer (13) is of thinner design compared to at least one further plastic layer (14).

6. Composite element according to any one of the preceding claims, **characterized in that** the metal layer (12), the intermediate layer (13) and at least one plastic layer (14) have a sandwich structure.

7. Method for producing a composite element comprising at least one metal layer (12), an intermediate layer (13) and at least one plastic layer (14) according to any one of Claims 1 to 6, **characterized in that** the intermediate layer (13) is applied to the metal layer (12) by an injection, injection moulding or compression moulding process and that in a further operation at least one further plastic layer (14) is applied by an injection, injection moulding or compression moulding process.

8. Method according to Claim 7, **characterized in that** the intermediate layer (13) and at least one further plastic layer (14) are produced by a multi-chamber injection moulding technique.

9. Method according to Claim 8, **characterized in that** the first layer (12) and at least one further layer (14) are applied by a rotary table system, a slide system or a semi-automated system.

10. Method according to Claim 7, **characterized in that** the intermediate layer (13) is applied at least to a section of the area of the metal layer (12) which is at least covered by at least one further plastic layer (14).

11. Method according to any one of Claims 7 to 10, **characterized in that** at least the surface of the metal layer (12) is at least partially pre-treated, surface-finished, coated or machined prior to the at least partial application of the intermediate layer (13).

12. Method according to any one of Claims 7 to 11, **characterized in that** metal layer (12) is pre-treated in areas and the intermediate layer (13) is applied to the pre-treated area of the metal layer (12).

## Revendications

1. Composant composite (11) qui présente une couche métallique (12), au moins une couche (14) de matière synthétique reliées l'une à l'autre au moins par parties par une opération d'injection, de moulage par injection ou de compression et au moins une couche intermédiaire (13) disposée en partie entre la couche métallique (12) et la ou les couches (14) en matière synthétique, **caractérisé en ce que** la couche intermédiaire (13) a une dureté Shore réduite qui découple la couche métallique (13) de l'autre couche (14) en matière synthétique, **en ce que** l'épaisseur de la couche intermédiaire (13) dépend de la longueur maximale de l'agencement superposé de la couche métallique (12) et de la ou des autres couches (14) en matière synthétique et **en ce que** cette couche intermédiaire (13) et la ou les autres couches (14) de matière synthétique qui y sont adjacentes sont réalisées en un matériau composite thermoplastique.

2. Composant composite selon la revendication 1, **caractérisé en ce que** la couche intermédiaire (13) s'étend entièrement entre la couche métallique (12) et la couche (14) de matière synthétique de façonnage.

3. Composant composite selon l'une des revendications précédentes, **caractérisé en ce qu'**au moins la surface de la couche métallique (12) présente au moins par parties un prétraitement, un revêtement ou un usinage.

4. Composant composite selon l'une des revendications précédentes, **caractérisé en ce que** la couche intermédiaire (13) et la couche (14) en matière synthétique sont configurées comme matériaux composites à plusieurs composants.

5. Composant composite selon l'une des revendications précédentes, **caractérisé en ce que** la couche intermédiaire (13) est plus mince qu'au moins une autre couche (14) en matière synthétique.

6. Composant composite selon l'une des revendications précédentes, **caractérisé en ce que** la couche métallique (12), la couche intermédiaire (13) et la ou les couches (14) en matière synthétique ont une structure en sandwich.

7. Procédé de fabrication d'un composant composite constitué d'au moins une couche métallique (12), d'une couche intermédiaire (13) et d'au moins une couche (14) de matière synthétique selon l'une des revendications 1 à 6, **caractérisé en ce que** la couche intermédiaire (13) est appliquée sur la couche métallique (12) par une opération d'injection, de moulage par injection ou de compression et **en ce que** dans une étape ultérieure, la ou les autres couches de matière synthétique (14) sont appliquées par une opération d'injection, de moulage par injection ou de compression.

8. Procédé selon la revendication 7, **caractérisé en ce que** la couche intermédiaire (13) et la ou les autres couches (14) de matière synthétique sont préparées par une technique de moulage par injection en plusieurs chambres.

9. Procédé selon la revendication 8, **caractérisé en ce que** la première couche (12) et la ou les autres couches (14) sont appliquées dans un système à plateau tournant, un système coulissant ou un système partiellement automatisé.

10. Procédé selon la revendication 7, **caractérisé en ce que** la couche intermédiaire (13) est appliquée au moins sur une partie de la surface de la couche métallique (12) recouverte au moins par la ou les autres couches (14) de matière synthétique.

11. Procédé selon l'une des revendications 7 à 10, **caractérisé en ce qu'**au moins la surface de la couche métallique (12) est au moins en partie prétraitée, affinée, revêtue ou usinée avant l'application au moins par parties de la couche intermédiaire (13).

12. Procédé selon l'une des revendications 7 à 11, **caractérisé en ce que** la couche métallique (12) est prétraitée par zones et **en ce que** la couche intermédiaire (13) est appliquée sur la surface préalablement traitée de la couche métallique (12).
